# EUROPEAN PATENT SPECIFICATION

(11) **EP 1 610 113 B1**
(45) Date of publication and mention of the grant of the patent: **27.09.2006**
(21) Application number: 04014680.5
(22) Date of filing: 23.06.2004
(51) Int. Cl.: G01N 3/32

(54) **Device for determining the loss factor of damping materials**
Vorrichtung für die Bestimmung der Verlustzahl von Dämpfungsmaterialien
Dispositif de détermination du facteur de perte de matériaux atténuants

(43) Date of publication of application: 28.12.2005
(73) Proprietor: Rieter Technologies A.G., 8406 Winterthur (CH)
(72) Inventor: Renault, Eric, 78410 Aubergenville (FR)
(74) Representative: Alder, Hans Rudi

(56) References cited:
- EP-A- 0 370 801
- EP-A- 1 001 184
- EP-A- 1 153 973
- EP-A- 1 177 950
- US-A- 4 170 141
- US-A- 5 060 919

## Description

The present invention relates to a device according to the preamble of Claim 1 for determining the loss factor of damping materials, in particular damping foils such as are used in the automobile industry.

Car body parts, machine housings of all types or other components having a large surface area and located in noisy surroundings are stimulated to oscillating at varying frequency levels and energy levels by sound waves and mechanical vibrations. Dependent upon the size of the component, its momentary tensional state, its mechanical degree of freedom, as well as the damping properties of the respective material, this can lead to a resonance-like oscillation amplification and these components can themselves become distinctive sources of noise. For cost reasons components used today are becoming ever thinner and lighter, and thus are more and more prone to self resonance. Thus, vibration damping and/or sound absorbing materials are used on these components in order to dampen the vibrations stimulated by motors, by various aggregates or by the travelling noise of car tires, or in order to directly absorb the noise energy radiated by the car engine or other noise emitters. These components made of vibration damping and sound absorbing materials are applied in the form of liners on or at the oscillating or vibrating surfaces, thus reducing the noise emitted to the exterior (or interior) by the vehicle or machine.

In order for a specific material to dampen such vibrations efficiently, it must have a high loss factor tan δ over as large a temperature and frequency range as possible (see EP 1'177'950). In the automobile industry this working temperature range lies between -20°C to +60°C. A high loss factor tan δ is desirable within this range.

It is common to determine the loss factor tan δ of vibration damping materials by means of a bending-vibration test according to DIN 53440 using the so-called "Oberst Method". Spring-metal strips or test strips covered with damping material having dimensions 240 mm x 10 mm x 1 mm are preferably used for carrying out such tests. These test strips are clamped into a stand (tripod) by means of a clamping screw and are stimulated into oscillating by using a hammer for single or plural excitation(s) or by means of a magnetic device for a continuous excitation having a predetermined frequency, or by other suitable means. The decaying performance of this oscillation in different temperature and frequency ranges is monitored by suitable sensors. Subsequently the spring-metal strip is coated with the material to be investigated and is subjected to the same tests. The data for the loss factor tan δ in a predetermined frequency and temperature range is then gathered from these tests and is evaluated based on the quantity of material used. As previously mentioned, the working temperature range for vibration damping materials in the automobile industry lies somewhere between -20°C and +60°C or more. In order to be able to give a reliable statement as to the frequency dependent loss factor tan δ of a particular material at a particular temperature it is necessary to subject the same test strips to a number of such tests at different temperatures. It is therefore preferable to use a climatic test chamber to carry out these tests. A stand is installed in this chamber, to which a spring-metal strip is clamped by means of a clamping screw. The required temperature for carrying out the test is set. Then the test is carried out. Subsequently, a different temperature is set. When the stand and the test strip have adjusted to the new temperature, the test is repeated. It is obvious that this kind of test procedure is very time and cost intensive.

For this reason it is now common to install a number of stands with different probes in the same climatic test chamber. Due to the fact that each stand has to be equipped with its own stimulator and sensors and the usable space for probes in each chamber is limited, it was - until now - not possible to install more than three stands in a known climatic test chamber.

In order to obtain test results which can be correlated it is essential that the probes are always stimulated in the same manner to oscillate. In particular it is essential that the stimulator always induces the same initial oscillation at the same location. Furthermore it is essential that the sensors always work by the same means or have comparable measurement discrepancies for recording the decaying oscillations. If three stands having three different exciters and three different sensors are used, then exactly these conditions are not fulfilled. Each exciter and each sensor has its own measurement discrepancies. Furthermore it cannot be guaranteed that the exciter always excites the initial oscillation at the same point on the test strip. It also cannot really be guaranteed that the decaying oscillations are callipered at identical points. Thus, the ability to correlate the measurement results achieved is limited.

It is therefore the aim of the present invention to provide a device for reliably determining the loss factor tan δ, and in particular the dynamic stiffness s of different materials and compositions of these materials in a reliable and comparable manner. In particular it is the aim of the present invention to provide a device which does not have the drawbacks of known devices and which allows measuring a much larger quantity of test strips (about 20 or more) under the same conditions in such a manner that the temperatures for all test strips are exactly the same, that the same initial oscillation is always excited at the same point on the test strip and that the decaying oscillations in the test strip are always callipered at the same point. This measured data should provide a dependable and correlatable definition of the loss factor and in particular of the stiffness for the respective materials and/or compositions.
The solution to this problem lies in a device having the features of claim 1. The device according to the invention for determining the temperature and frequency dependent loss factor tan δ of damping material arrangements comprises at least one actuator for exciting a test strip and at least one sensor for detecting a test strip signal. The sensor is connected with an evaluation device for determining the loss factor tan δ. Such evaluation devices are known in the art and are usually based on a Fourier-analysis of the detected test strip signals or on an analysis of a periodic signal, i.e. a sweep sinus. This evaluation device not only enables determining the loss factor but also enables determining the dynamic stiffness s or other material parameters which define the damping behaviour of the damping material arrangement. It is essential for the arrangement according to the invention that the respective actuator and its sensor are arranged on a turntable in such a manner that a plurality of test strips can be positioned in front of the same actuator and sensor a number of times and in the identical position. For this the turntable is equipped with a plurality of clamping points, preferably 20 or more, for securing the test strips. The actuator and the sensor are preferably arranged at the support structure of the turntable, whilst the clamping points for securing the test strips are provided at the rotating part (i.e. rotary table) of the turntable. By means of a stepped rotation of the rotary table, the individual damping material arrangements are repeatedly and exactly positioned in front of the same actuator and sensor. According to the invention, in order to obtain a number of correlatable measurements at differing temperatures for the same probe, the turntable is provided within a climatic chamber. It is understood that the actuator can be a mechanically operating oscillation exciter, and in particular an actuator in the form of a hammer generator or a magnetic oscillation exciter, whereby also the exciter frequency of the respective oscillation exciters is adjustable. The damping material arrangement which is to be measured generally comprises a spring metal strip coated with a damping material, whereby the damping material can be a single- or multiple-layered composite material. The clamping points for securing the test strips are preferably arranged at the rotating part of the turntable (rotary table). A further embodiment of the device according to the invention preferably comprises a plurality of sensors for determining the same or different material properties. For this purpose the device according to the invention comprises sensor positioning means for precisely positioning the different sensors in front of the respective test strips, for example by means of at least one linearly or circularly running vertical rail and by means of at least one measurement carriage displaceable along this rail. The 20 or more test strips to be measured are secured, preferably to the rotary table, by clamping screws, by a circumferentially arranged magnetic rail or by similar means. The turntable is arranged in a climatic chamber in order to ensure an adjustable and constant temperature during the measurement process. In order to determine the loss factor tan δ or the dynamic stiffness s or some other property of the material, a spring metal strip coated with the damping material to be measured is moved to the actuator; then this test strip is excited into oscillating and the decaying oscillations are detected by a suitable sensor. It is preferable that a number of different sensors are brought to this position simultaneously or successively. From the data obtained in this way it is possible, for example, to determine the loss factor tan δ for a predetermined material at a specific temperature and in a specific frequency range. Then the rotary table is turned in order to position the next test strip in front of the actuator. After this cycle of measurements the temperature in the climatic chamber is altered and the same tests are carried out under the new test conditions, while the post processing is carried out.

The advantages of this device are immediately obvious to the expert. In particular it is possible to automatically measure a plurality of test strips; the use of a climatic chamber allows for adjusting and holding different temperatures and humidity conditions; for all measurements the same actuator and the same sensors can be used; as a result, the measurements always evidence the same discrepancies and are thus correlatable; actuator and sensors do not need to be adjusted in a cost and time intensive manner; the same initial oscillation is excited at always the same point on the test strip; and the sensors detect the decaying oscillations at always the same point.

The present invention shall be described in more detail by means of an exemplary embodiment and with the aid of the drawings.
Fig. 1 shows a schematic view of the device according to the invention;
Fig. 2 shows a schematic view of a cross-section through a partial arrangement of the device according to the invention.

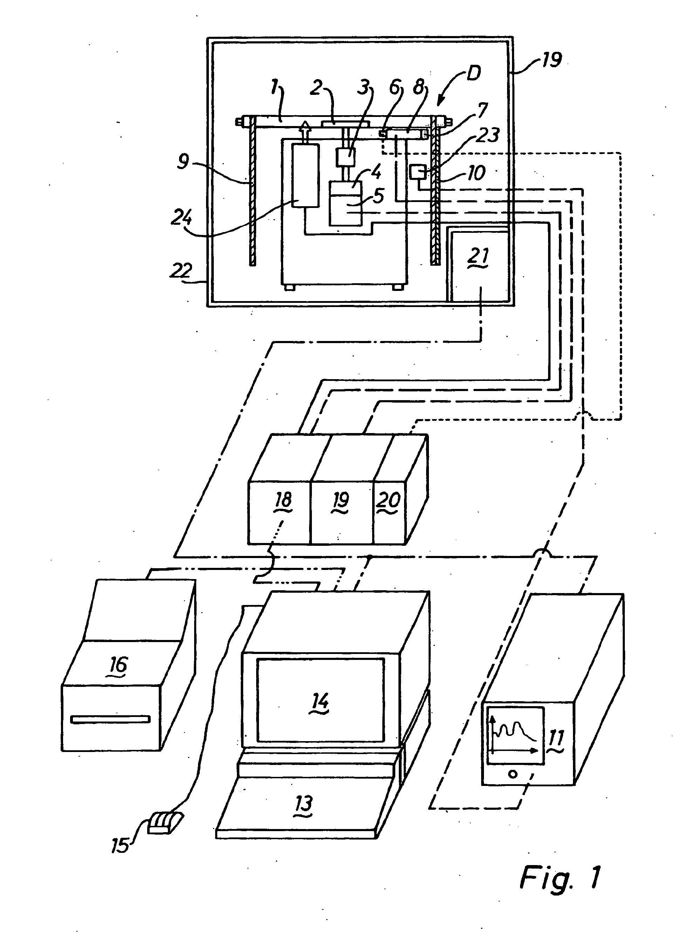

The basic construction of an embodiment of the device according to the invention can be seen in Figure 1. This device essentially comprises a turntable D having a rotary table 1 supported on a supporting frame. This turntable is arranged inside a climatic chamber 19 and is provided with at least one suitable exciter and sensor. This sensor and actuating parts of the device are connected to an evaluation means.

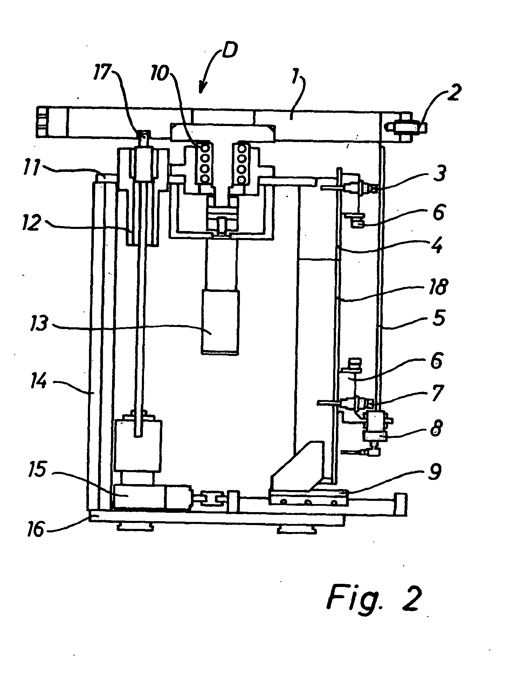

By means of a constructive exemplary embodiment Figure 2 shows more details of the turntable D, whose supporting frame comprises a carrier plate 11, which rests on a plurality of supporting pillars 14. These supporting pillars 14 are, in turn, fixedly connected to a base plate 16. The rotary table 1 comprises a number of securing means for spring metal strips 5 which are coated with a damping material. In a preferred embodiment of the invention, the rotary table 1 is provided with 20 clamping points or clamping screws 2. It is evident that different securing means can be used. For example, a magnetic rail can be arranged at the periphery of the rotary table 1, said magnetic rail having predetermined areas or recesses on or into which the coated spring metal strips can be placed. The rotary table 1 has an axis in its center which rests on a bearing 10 and on which the rotary table 1 is turned by means of a gear-motor-unit 13. In order to take measurements, a test strip 5 is secured at each clamping point 2. Each clamping point 2 having a clamping screw has an equivalent engagement point 17 on the opposite side. In order to be able to carry out a measurement, the rotary table1 is rotated by means of the gear-motor-unit 13 until a positioning and blocking device 12 engages in the engagement point 17. If it is the first measurement which is to be carried out, then this means that the sensors to be used must previously have been suitably positioned. On a measuring carriage 9 there is secured an upper vertical rail 4 and a lower vertical rail 18. For moving horizontally, the measuring carriage 9 can be moved inwardly and outwardly by means of a gear-motor-unit 15. A sensor 7 located on the lower vertical rail 18 ensures that the sensor 3, for detecting the decaying oscillations and which is secured at the upper vertical rail 4, is suitably positioned relative to the spring metal strip. When the sensor 3 is correctly positioned, then the measuring carriage 9 is secured in such a manner that it cannot be moved during the entire measurement sequence. As is seen in Figure 1, this turntable is situated in a climatic chamber 19 which permits to set any desired temperature, in particular between -20°C and +60°C, and any relative humidity. When the sensor 3 has been suitably positioned in relation to the test strip 5 and when the desired temperature and humidity have been reached in the climatic chamber, then the measurement procedure can begin. By means of an exciter, also called actuator 8, for example an electromagnetically controlled and/or electromagnetically working actuator 8 or hammer, the test strip 5 is subjected to a forced oscillation or is caused to oscillate. The decaying oscillation movements are detected by means of a sensor 3. Suitable sensors would be magnetic, capacitive, optic (laser) or other. The data detected in this manner are evaluated and the loss factor tan δ and/or the dynamic stiffness s are determined. After the oscillation has stopped, the positioning and blocking device 12 is unlatched and the rotary table 1 is turned by means of the gear-motor-unit 13 (step motor) until the positioning and blocking device 12 engages in the next engagement point 17. Then the next test strip is subjected to a vibration test etc. After the required measurements have been taken for all test strips 5 at a specific temperature, the climatic chamber 19 is set to have the desired temperature and humidity. When these new test conditions have been reached in the climatic chamber, a further cycle of measurements is performed. This procedure is continued until the required data for a reliable determination of the desired material parameters has been collected, and in particular the loss factor tan δ and the dynamic stiffness s has been determined for each test strip.

The exemplary embodiment described above concerns the use of the device according to the invention for measuring the loss factor tan δ of damping foils such as are used in the automobile industry. The device can also be used to measure other key factors, such as stiffness of a specific materials, etc. The use of the device according to the invention is not limited to one specific technical area.

## Claims

1. Device for determining the temperature and frequency dependent loss factor (tan δ) and/or the dynamic stiffness (s) of damping material arrangements, said device comprising at least one actuator (8) for exciting a test strip (5) and at least one sensor (3) for detecting a test strip signal, said sensor (3) being connected with an evaluation device for determining the loss factor (tan δ), **wherein** the actuator (8) and the sensor (3) are mounted at a turntable (D) having a rotary table (1), said turntable (D) comprising a plurality of clamping points (2) for securing the test strips (5), whereby the actuator (8), the sensor (3) and the test strip (5) are arranged at the turntable (D) in such a manner that each test strip (5) can be positioned more than once and at exactly the same position in front of the same actuator (8) and/or sensor (3), and whereby the turntable (D) is arranged in a climatic chamber (19).

2. Device according to claim 1, **wherein** the damping material arrangement is a spring metal strip coated with damping material.

3. Device according to claim 2, **wherein** the damping material is a single- or multilayered composite material.

4. Device according to claim 1, **wherein** the actuator (8) comprises a mechanically working oscillation exciter.

5. Device according to claim 1, **wherein** the actuator (8) comprises a magnetically working oscillation exciter.

6. Device according to one of claims 4 or 5, **wherein** the excitation frequency of the actuator (8) is settable.

7. Device according to claim 1, **wherein** the clamping points (2) for securing the test strips (5) are arranged at the rotary table (1).

8. Device according to claim 1, **wherein** said device comprises a plurality of sensors (3) for detecting different material properties.

9. Device according to claim 8, **wherein** sensor positioning means (4, 18) for precisely positioning the different sensors (3) in front of the test strips (5) are provided.

10. Device according to claim 9, **wherein** the sensor positioning means (4, 18) comprise at least one vertical rail and at least one measurement carriage (9).

## Patentansprüche

1. Vorrichtung zur Bestimmung des temperatur- und frequenzabhängigen Verlustfaktors tan (δ) und/oder der dynamischen Steifigkeit (s) von Dämpfungsmaterialanordnungen, welche Vorrichtung mindestens einen Aktuator (8) zur Anregung eines Probenstreifens (5) und mindestens einen Sensor (3) zur Erfassung eines Probenstreifensignals aufweist, welcher Sensor (3) mit einer Auswertevorrichtung für die Bestimmung des Verlustfaktors (tan δ) verbunden ist, **dadurch gekennzeichnet, dass** der Aktuator (8) und der Sensor (3) an einem Drehtisch (D) mit einem Drehteller (1) angebracht sind, welcher Drehtisch (D) eine Vielzahl von Klemmstellen (2) für die Befestigung der Probenstreifen (5) aufweist, wobei der Aktuator (8), der Sensor (3) und der Probenstreifen (5) am Drehtisch (D) derart angeordnet sind, dass jeder der Probenstreifen (5) mehrmals und positionsgenau vor denselben Aktuator (8) und/oder Sensor (3) positionierbar ist, und wobei der Drehtisch (D) in einer Klimakammer (19) angeordnet ist.

2. Vorrichtung nach Anspruch 1, **dadurch gekennzeichnet, dass** die Dämpfungsmaterialanordnung ein mit Dämpfungsmaterial beschichteter Federmetallstreifen ist.

3. Vorrichtung nach Anspruch 2, **dadurch gekennzeichnet, dass** das Dämpfungsmaterial ein ein- oder mehrschichtiges Komposit-Material ist.

4. Vorrichtung nach Anspruch 1, **dadurch gekennzeichnet, dass** der Aktuator (8) einen mechanisch wirkenden Schwingungserreger aufweist.

5. Vorrichtung nach Anspruch 1, **dadurch gekennzeichnet, dass** der Aktuator (8) einen magnetisch wirkenden Schwingungserreger aufweist.

6. Vorrichtung nach einem der Ansprüche 4 oder 5, **dadurch gekennzeichnet, dass** die Erregerfrequenz des Aktuators (8) einstellbar ist.

7. Vorrichtung nach Anspruch 1, **dadurch gekennzeichnet, dass** die Klemmstellen (2) für die Befestigung der Probenstreifen (5) am Drehteller (1) angeordnet sind.

8. Vorrichtung nach Anspruch 1, **dadurch gekennzeichnet, dass** diese mehrere Sensoren (3) zur Erfassung von unterschiedlichen Materialeigenschaften aufweist.

9. Vorrichtung nach Anspruch 8, **dadurch gekennzeichnet, dass** Sensorpositionierungsmittel (4, 18) zum positionsgenauen Positionieren der verschiedenen Sensoren (3) vor dem Probenstreifen (5) vorgesehen sind.

10. Vorrichtung nach Anspruch 9, **dadurch gekennzeichnet, dass** die Sensorpositionierungsmittel (4, 18) mindestens eine Vertikalschiene und mindestens einen Mess-Schlitten (9) umfassen.

## Revendications

1. Dispositif pour déterminer un facteur de pertes (tan δ) dépendant de la température et de la fréquence et/ou la raideur dynamique (s) d'agencements de matériau amortisseur, ledit dispositif comprenant au moins un actionneur (8) pour exciter une bande d'essai (5) et au moins un capteur (3) pour détecter un signal de la bande d'essai, ledit capteur (3) étant connecté à un dispositif d'évaluation pour déterminer le facteur de pertes (tan δ), dans lequel l'actionneur (8) et le capteur (3) sont montés sur un plateau tournant (D) comportant une table rotative (1), ledit plateau tournant (D) comprenant une pluralité de points de serrage (2) pour fixer les bandes d'essai (5), l'actionneur (8), le capteur (3) et la bande d'essai (5) étant disposés sur le plateau tournant (D) de telle manière que chaque bande d'essai (5) puissc être positionnée plus d'une fois et exactement dans la même position devant le même actionneur (8) et/ou capteur (3), et le plateau tournant (D) étant ainsi disposé dans une chambre climatique (19).

2. Dispositif selon la revendication 1, dans lequel l'agencement de matériau amortisseur est une bande de métal à ressorts recouverte du matériau amortisseur.

3. Dispositif selon la revendication 2, dans lequel le matériau amortisseur est un matériau composite monocouche ou multicouches.

4. Dispositif selon la revendication 1, dans lequel l'actionneur (8) comprend un excitateur mécanique d'oscillations.

5. Dispositif selon la revendication 1, dans lequel l'actionneur (8) comprend un excitateur magnétique d'oscillations.

6. Dispositif selon l'une des revendications 4 ou 5, dans lequel la fréquence d'excitation de l'actionneur (8) est réglable.

7. Dispositif selon la revendication 1, dans lequel les points de serrage (2) pour fixer les bandes d'essai (5) sont disposés sur la table rotative (1).

8. Dispositif selon la revendication 1, dans lequel ledit dispositif comprend une pluralité de capteurs (3) pour détecter les différentes propriétés du matériau.

9. Dispositif selon la revendication 8, dans lequel des moyens de positionnement de capteur (4, 18) pour positionner avec précision les différents capteurs (3) devant les bandes d'essai (5) sont fournis.

10. Dispositif selon la revendication 9, dans lequel les moyens de positionnement de capteur (4, 18) comprennent au moins un rail vertical et au moins un chariot de mesure (9).
